(19) Europäisches Patentamt
European Patent Office
Office européen des brevets

(11) **EP 2 245 097 B1**

(12) **EUROPÄISCHE PATENTSCHRIFT**

(45) Veröffentlichungstag und Bekanntmachung des Hinweises auf die Patenterteilung:
**24.10.2012   Patentblatt 2012/43**

(51) Int Cl.:
***C09D 5/00*** *(2006.01)*     ***C09D 7/00*** *(2006.01)*

(21) Anmeldenummer: **09710155.4**

(86) Internationale Anmeldenummer:
**PCT/EP2009/001044**

(22) Anmeldetag: **13.02.2009**

(87) Internationale Veröffentlichungsnummer:
**WO 2009/100938 (20.08.2009 Gazette 2009/34)**

(54) **WÄSSRIGE BESCHICHTUNGSZUSAMMENSETZUNG, VERFAHREN ZUR HERSTELLUNG UND IHRE VERWENDUNG**

AQUEOUS COATING COMPOSITION, METHOD FOR PRODUCTION OF THE SAME AND USE THEREOF

COMPOSITION DE REVÊTEMENT AQUEUSE, PROCÉDÉ DE FABRICATION ET UTILISATION DE CETTE COMPOSITION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **15.02.2008   DE 102008009481**

(43) Veröffentlichungstag der Anmeldung:
**03.11.2010   Patentblatt 2010/44**

(73) Patentinhaber: **BASF Coatings GmbH**
**48165 Münster (DE)**

(72) Erfinder:
• **LÜER, Ingo**
  **48165 Münster (DE)**
• **WEGNER, Egon**
  **48268 Greven (DE)**

(74) Vertreter: **Leifert & Steffan**
**Patentanwälte**
**Postfach 10 40 09**
**40031 Düsseldorf (DE)**

(56) Entgegenhaltungen:
**EP-A- 1 153 989          WO-A-99/24485**
**WO-A-2004/024837      WO-A-2005/049745**
**WO-A-2006/041658      DE-A1- 4 028 386**
**DE-A1- 19 928 235       DE-A1-102006 020 190**
**US-A1- 2004 039 097     US-A1- 2004 109 853**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft eine neue Beschichtungszusammensetzung auf Wasserbasis. Weiterhin betrifft die Erfindung ein Verfahren zur Herstellung der Beschichtungszusammensetzung. Zudem betrifft die Erfindung die Verwendung der Beschichtungszusammensetzung.

Insbesondere bei der Automobillackierung, aber auch in anderen Bereichen, in denen man Überzüge mit guter dekorativer Wirkung und gleichzeitig einen guten Korrosionsschutz wünscht, ist es bekannt, Substrate mit mehreren, übereinander angeordneten Überzugsschichten zu versehen.

Mehrschichtlackierungen werden bevorzugt nach dem sogenannten "Basecoat/Clearcoat"-Verfahren aufgebracht, d. h. es wird ein pigmentierter Basislack vorlackiert und nach kurzer Ablüftzeit ohne Einbrennschritt (nass-in-nass-Verfahren) mit Klarlack überlackiert. Anschließend werden Basislack und Klarlack zusammen eingebrannt.

Besonders große Bedeutung hat das "Basecoat/Clearcoaf'-Verfahren bei der Applikation von Automobil-Metalleffektlacken erlangt.

Wirtschaftliche und ökologische Gründe haben dazu geführt, dass versucht wurde, bei der Herstellung von Mehrschichtüberzügen wässrige Basisbeschichtungszusammensetzungen einzusetzen.

Die Beschichtungszusammensetzungen zur Herstellung dieser Basisschichten müssen nach dem heute üblichen rationellen "nass-in-nass"-Verfahren verarbeitbar sein, d. h. sie müssen nach einer möglichst kurzen Vortrocknungszeit ohne Einbrennschritt mit einer transparenten Deckschicht überlackiert werden können, ohne Störungen im visuellen Erscheinungsbild wie zum Beispiel sogenannte "Nadelstiche" zu zeigen.

Darüber hinaus muss der Lack auch ausreichende Lagerungsstabilität zeigen. Eine übliche Prüfung ist die Lagerung des Materials bei 40 °C.

Bei Metalleffektlacken des Basecoat/Clearcoat-Typs müssen außerdem noch weitere Probleme gelöst werden. Der Metalleffekt hängt entscheidend von der Orientierung der Metallpigmentteilchen im Lackfilm ab. Ein im "nass-in-nass"-Verfahren verarbeitbarer Metalleffektbasislack muss demnach Lackfilme liefern, in denen die Metallpigmente nach der Applikation in einer günstigen räumlichen Orientierung vorliegen und in denen diese Orientierung schnell so fixiert wird, dass sie im Laufe des weiteren Lackierungsprozesses nicht gestört werden kann. Geeignete Kenngrößen zur Charakterisierung des Metalleffektes sind die Helligkeit des Farbtons und der Flop-Index.

Aus der Offenlegungsschrift DE 40 28 386 A1 sind wasserverdünnbare Beschichtungszusammensetzungen bekannt, die ein wasserverdünnbares Polyurethanharz als Bindemittel, Pigmentteilchen, ein Verdickungsmittel sowie ein Polyamid als Rheologiehilfsmittel enthalten. Derartige Lacke zeigen einen nicht ausreichenden Metalleffekt und eine erhöhte Neigung zur Sedimentation nach Lagerung bei erhöhter Temperatur (40 °C).

Die US 2004/0039097 A1 offenbart einen Metallic-Lack auf Wasserbasis, der ebenfalls Polyamide als Rheologiehilfsmittel umfasst.

Die EP 1 153 989 A1 offenbart eine metallische Beschichtungszusammensetzung auf Wasserbasis, die sich neben einer Harzzusammensetzung und einem Pigment aus Metallsilikat und einem Polyamidharz als Rheologiehilfsmittel zusammensetzt. Die Gegenwart von Schichtsilikaten kann allerdings in Abhängigkeit von der Bindmittelkombination zu Nadelstichen führen.

Es ist Aufgabe der vorliegenden Erfindung, eine neue Beschichtungszusammensetzung zur Verfügung zu stellen, die die Nachteile des Standes der Technik nicht aufweist. Diese Zusammensetzung soll verbesserte Applikationseigenschaften aufweisen. So soll die Nadelstichbildung varringert werden, wobei der Motalleffekt nicht negativ beeinflusst werden soll. Weiterhin sollen die Sedimentationsstabilltät der Zusammensetzung gewährleistet sein.

Die Begriffe "Nadelstiche" und "Metalleffekt" sind den Fachmann bekannt und beispielsweise definiert im Römpp Lexikon, Lacke und Druckfarben, Georg Thieme Verlag 1998.

Überraschenderweise wurde gefunden, dass diese Aufgabe durch die Kombination von Polyamiden und Poly (meth)acrylsäuren als Rheologlehilfsmittel gelöst werden kann.

Gegenstand der vorliegenden Erfindung ist daher eine Beschichtungszusammensetzung auf Wasserbasis, umfassend mindestens eine Harzzusammensetzung für eine Beschichtungszussmmensetzung auf Wasserbasis und als Rheologlehilfsmittel mindestens ein Polyamid und mindestens ein Acrylatverdicker auf Poly(meth)acrylsäure-Basis, welche dadurch gekennzeichnet ist, dass das Massenverhältnis Polyamid:Acrylatverdicker bei 10:1 bis 3:1 liegt. Vorzugsweise Ist der Acrylatverdicker eine Polyacrylsäure.

Poly(methyacryl)säuren sind übliche und bekannte Verbindungen und werden beispielsweise von der Firma Ciba Speciallty Chemicals unter der Marke Viscsdex® vertrieben.

Unter Polyamiden werden organische Verbindungen verstanden, die mindestens zwei Amidstrukturen im Molekül enthalten. Derartige Verbindungen können hergestellt werden durch Umsetzung von Polycorbonsäuren mit Polyaminen und/oder Monoaminen oder durch Umsetzung von Polyaminen mit Mono- und/oder Polycarbonsäuren. Polyamide, die durch Umsetzung von Polyaminen mit Fettsäuren, insbesondere Palyamide, die durch Umsetzung von Polyaminen mit Fottsäuren, die 16 bis 20 G-Atome pro Molekül enthalten, werden bevorzugt eingesetzt. Besonders bevorzugt wird das Umsetzungsprodukt aus 12-Hydroxysterarinsäure und 1,8-Hexandiamin. Ein geeigneter kommerziell erhältlicher Polyamidverdicker ist beispielsweise unter dem Handelsnamen Diaparlon® AQ 630 (Hersteller Kusumoto, Japan) erhältlich,

Die erfindungsgemäßen Beschichtungszusammensetzungen enthahen in der Regel 0,5 bis 15 Massen-%, bezogen auf den Gesamtbindemittelfeskörper, Rheologiehilfsmittel. In den Fällen, in denen keine Metellpigmente enthalten sind, werden 0,5 bis 10 Massen-%, vorzugsweise 1,6 bis 8 Massen-%, bezogen auf den Gesamtbindemittelfestkörper, Rheologiehilfsmittel eingesetzt. In Metallpement enthaltenden Beschichtungszusammensetzungen werden 2 bis 15 Massen-%, vorzugsweise 4 bis 12 Massen-%. bezogen auf den Gesamtbindemitelfestkörper, Rheologlehilfsmittel eingesetzt.

Das Massenverhältnis Polyamid:Acrylatverdicker ist dabei 10:1 bis 3:1, bevorzugt 7:1 bis 3:1.

Die erfindungsgemäßen Beschichtungszusammensetzungen können mindestens ein weiteres Rheologiehilfsmittel enthalten. Vorzugsweise ist dieses Rheologiehilfsmittel ausgewählt aus der Gruppe bestehend aus assoziativen Verdickungsmitteln auf Polyurethan-Basis, Carboxymethylcelluloseacetobutyrat-Verdicker, Metallsilikat und Kleselsäure. Bevorzugt ist das weitere Rheologlehilfsmittel ein Metallsilikat

Das Massenverhältnis der Festkörperanteile Polyamid:Acrylatverdicker weiterem Verdicker ist dabei 12:1:1 bis 1:0,5:1, bevorzugt 7:1:1 bis 3:0,5:1.

Das Metallsilikat wird bevorzugt aus der Gruppe der Smektite ausgewählt Besonders bevorzugt werden die Smektite aus der Gruppe der Montmorillonite und Hectorite ausgewählt. Insbesondere werden die Montmorillonite und Hectorite aus der Gruppe bestehend aus Aluminium-Magnesium-Silikaten sowie Natrium-Magnesium-und Natrium-Magnesium-Fluor-Lithium-Schichtsilikaten, ausgewählt. Die anorganischen Schichtsilikate werden beispielsweise von der Firma Rockwood unter der Marke Laponite® vertrieben. Der Massenanteil an Metallsilikat Ist vorzugsweise nicht höher als 2.5 Massen-%, bezogen auf den Gesamtbindemittelfestkörper.

Das assoziative Verdickungsmittel auf Polyurethanbasis wird beispielsweise in der DE 199 46 574 A1 offenbart. Auch die assoziativen Verdickungsmittel auf Polyurethanbasis sind übliche und bekannte Verbindungen und werden beispielsweise von der Firma Hankal unter der Marke Nopco® vertrieben Carboxymethylcelluloseacetobutyrat-Verdicker werden beispielsweise von der Firma Eastman unter dem Namen CMCAB 641-0,2, Kieselsäuren werden beispielsweise unter dem Namen Aerosil® von der Firma Evonik vertrieben.

Die erfindungsgemäßen Beschichtungszusammensetzungen können auch weitere übliche Zusätze wie Füllstoffe, Weichmacher, Stabilisatoren, Netzmittel, Dispergierhilfsmittel, Verlaufsmittel, Entschäumer und Katalysatoren einzeln oder im Gemisch enthalten.

Die erfindungsgemäßen Beschichtungszusammensetzungen können mindestens ein farb- und/oder effektgebendes Pigment enthalten. Als Beispiele seien Titandioxid, Graphit, Russ, Phthalocyaninblau, Chromoxid und Perylentetracarbonsäureimide genannt. Die farb- und/oder effektgebenden Pigmente sind vorzugsweise ausgewählt aus der Gruppe bestehend aus organischen und anorganischen, farbgebenden, füllenden, rheologiesteuernden, optisch effektgebenden, elektrisch leitfähigen, magnetisch abschirmenden und fluoreszierenden Pigmenten, Metallpigmenten bzw. - pulvern, organischen und anorganischen, transparenten oder deckenden Füllstoffen und Nanopartikeln. Bevorzugt ist eine Beschichtungszusammensetzung, die ein Metallpigment enthält. Besonders bevorzugt ist das Metallpigment ausgewählt aus der Gruppe bestehend aus Aluminium, Bismuthoxychlorid, Glimmer, titianoxidbeschichtetem Glimmer, eisenoxid-beschichtetem Glimmer, glimmerhaltigem Eisenoxid, titanoxid-beschichteter Kieselsäure, titanoxid-beschichtetem Aluminium, eisenoxid-beschichteter Kieselsäure und eisenoxid-beschichtetem Aluminium. Sofern in den erfindungsgemäßen Beschichtungszusammensetzungen neben den Metallpigmenten weitere Farbpigmente enthalten sind, wird Art und Menge der Farbpigmente so gewählt, dass der erwünschte Metalleffekt nicht unterdrückt wird. Der Massenanteil des Metallpulvers, bezogen auf den Gesamtbindemittelfestkörper, beträgt bis zu 32 Massen-%, vorzugsweise 12 bis 28 Massen-%.

Die Erfindung umfasst auch Beschichtungszusammensetzungen ohne Metallpigment. Diese Zusammensetzungen werden als Uni-Basislacke oder Uni-Decklacke bezeichnet.

Die erfindungsgemäßen Beschichtungszusammensetzungen enthalten als flüssiges Verdünnungsmittel Wasser, das ggf. auch noch organische Lösungsmittel enthalten kann. Der Anteil an organischen Lösungsmitteln wird so gering wie möglich gehalten.

Als Beispiele für Lösungsmittel, die im Wasser vorhanden sein können, seien heterocyclische, aliphatische oder aromatische Kohlenwasserstoffe, ein- oder mehrwertige Alkohole, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon, Aceton, Isophoron oder Mischungen davon genannt.

Eine Harzzusammenfassung für eine erfindungsgemäße Beschichtungszusammensetzung umfasst ein Bindemittel, das in Wasser gelöst oder dispergiert werden kann, und ein Vernetzungsmittel. Als Beispiele für brauchbare wasserverdünnbare Bindemittel seien wasserverdünnbare Polyacrylate, wasserverdünnbare Polyester, wasserverdünnbare Polyether, wasserverdünnbare Melamin- und Harnstoffharze und wasserverdünnbare Polyurethanharze genannt, wie sie etwa in der EP 0 158 099 A2 offenbart werden.

Bevorzugt sind Beschichtungszusammensetzungen, die wasserverdünnbare Polyurethanharze als Bindemittel enthalten. Besonders bevorzugte Beschichtungszusammensetzungen werden erhalten, wenn Polyurethane, die mindestens eine seitenständige und/oder mindestens eine endständige Ethenylarylengruppe enthalten, eingesetzt werden. Diese wässrigen Bindemittel sind beispielsweise in der deutschen Offenlegungsschrift DE 199 48 004 A1 beschrieben.

Weiterhin sind Beschichtungszusammensetzungen besonders bevorzugt, die Polyurethanharze, die eine Säurezahl von 5 bis 70 aufweisen, enthalten. Beispielsweise werden diese in der deutschen Offenlegungsschrift DE 035 45 618 A1 offenbart.

Die Polyurethanharze enthaltenden Beschichtungszusammensetzungen enthalten vorteilhafterweise als zusätzliche Bindemittelkomponente ein wasserverdünnbares Melaminharz. Besonders vorteilhaft ist ein Anteil von 1 bis 80 Massen-%, ganz besonders vorteilhaft 30 bis 70 Massen-%, bezogen auf den Anteil des wasserverdünnbaren Polyurethanharzes. Wasserverdünnbare Melaminharze sind beispielsweise veretherte Melamin-Formaldehyd-Kondensationsprodukte. Ihre Wasserlöslichkeit hängt - abgesehen vom Kondensationsgrad, der möglichst niedrig sein soll - von der Veretherungskomponente ab, wobei nur die niedrigsten Glieder der Alkanol- bzw. Ethylenglykolmonoetherreihe wasserlösliche Kondensate ergeben. Die größte Bedeutung haben die mit Methanol veretherten Melaminharze. Bei Verwendung von Lösungsvermittlern können auch butanolveretherte Melaminharze in wässriger Phase dispergiert werden.

Es besteht auch die Möglichkeit, Carboxylgruppen in das Kondensat einzufügen. Umetherungsprodukte hochveretherter Formaldehydkondensate mit Oxycarbonsäure sind über ihre Carboxylgruppe nach Neutralisation wasserlöslich und können in den erfindungsgemäßen Beschichtungszusammensetzungen enthalten sein.

Anstelle der beschriebenen Melaminharze können auch andere wasserlösliche oder wasserdispergierbare Aminoharze wie z. B. Harnstoffharze eingesetzt werden.

Wenn die Beschichtungszusammensetzung ein Melaminharz enthält, kann sie vorteilhafterweise zusätzlich als weitere Bindemittelkomponente ein wasserverdünnbares Polyesterharz und/oder ein wasserverdünnbares Polyacrylatharz enthalten. Der Massenverhältnis beträgt dabei vorzugsweise Melaminharz zu Polyester-/ Polyacrylatharz 2:1 bis 1:4 und das Massenverhältnis Melaminharz plus Polyester- und/oder Polyacrylatharz zu Polyurethanharz vorzugsweise 4:1 bis 1:4, bevorzugt 2:1 bis 1:2, besonders bevorzugt 1,3:1 bis 1:1,3. Als wasserverdünnbare Polyesterharze werden vorzugsweise Hydroxylgruppen tragende gesättigte und ungesättigte Polyesterharze eingesetzt, wie sie etwa in den Offenlegungsschriften DE 40 28 386 A1 und DE 44 37 535 A1 erwähnt werden.

Die Polyesterharze enthalten bevorzugt keine polymerisierbaren Doppelbindungen. Besonders bevorzugt sind Polyesterdiole. Ganz besonders bevorzugt sind Polyesterdiole mit einem zahlenmittleren Molekulargewicht von 400 bis 5000.

Die erfindungsgemäß eingesetzten Polyesterharze enthalten als solubilisierende Gruppen vorzugsweise Carboxylatgruppen.

Vorzugsweise wird als wasserverdünnbares Polyacrylatharz ein polyurethanmodifiziertes Polyacrylat eingesetzt. Dieses ist beispielsweise in der Offenlegungsschrift DE 44 37 535 A1 offenbart.

Die erfindungsgemäßen Beschichtungszusammensetzungen enthalten 5 bis 30 Massen-%, bevorzugt 10 bis 25 Massen-%, wasserverdünnbare Bindemittelbestandteile.

Beispiele geeigneter Vernetzungsmittel sind Aminoplastharze, Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten, wie sie in der europäischen Patentschrift EP 0 596 460 A1 beschrieben werden.

Werden unblockierte Polyisocyanate als Vernetzungsmittel gewählt, wird die erfindungsgemäße Beschichtungszusammensetzung auf Wasserbasis als 2-Komponenten-Zusammensetzung formuliert.

Derartige Vernetzungsmittel sind dem Fachmann gut bekannt und werden von zahlreichen Firmen als Verkaufsprodukte angeboten.

Der Massenanteil des Bindemittels zu dem Vernetzungsmittel beträgt vorzugsweise 50 bis 90 Massen-%, bezogen auf die gesamte Menge beider Komponenten. Bevorzugt ist ein Bereich von 65 bis 85 Massen-%.

Die vorliegende Erfindung betrifft weiterhin ein verfahren zur Herstellung der erfindungsgemäßen Beschichtungszusammensetzungen.

Die erfindungsgemäße Beschichtungszusammensetzung kann dadurch hergestellt werden, dass die jeweiligen Komponenten der Beschichtungszusammensetzung, die oben beschrieben worden sind, in einem Medium auf Wasserbasis beispielsweise mittels Schnellrührer, Dissolver oder In-Line-Dissolver gemischt und dispergiert werden.

Die vorliegende Erfindung betrifft zudem die Verwendung der erfindungsgemäßen Beschichtungszusammensetzungen als Lackierung auf zu beschichtende Gegenstände, wie aus Metall oder Kunststoff hergestellte Karosserien und deren Teile von Automobilen wie Personenkraftwagen, Lastwagen, Motorrädern und Autobussen, und aus Metall oder Kunststoff hergestellte Teile von elektrischen Haushaltsprodukten, und zwar direkt oder nach dem vorangegangenen Auftragen einer Grundbeschichtungszusammensetzung, wie einer kationisch elektroabscheidbaren Beschichtungszusammensetzung, und erforderlichenfalls einer Zwischenbeschichtungszusammensetzung auf die zu beschichtenden Gegenstände und anschließendes Härten dieser Beschichtungsfilme. Vorzugsweise wird die Beschichtungszusammensetzung als Lackierung auf Automobilkarosserien und deren Teile aufgebracht. Die zu beschichtenden metallischen Gegenstände werden zuvor bevorzugt einer chemischen Umwandlungsbehandlung mit Phosphaten und Chromaten unterworfen. Weiterhin können bekannte herkömmliche Materialien als Unterbeschichtungszusammensetzungen und als Zwischenbeschichtungszusammensetzungen zum Einsatz kommen.

Die erfindungsgemäße Beschichtungszusammensetzung kann auf diese zu beschichtenden Gegenstände (mit Einschluss von solchen, die mit der Unterbeschichtungszusammensetzung beschichtet worden sind und die weiterhin in geeigneter Weise mit der Zwischenbeschichtungszusammensetzung beschichtet worden sind) durch ein elektrostatisches Beschichten, durch ein Luftspraybeschichten und durch luftloses Spraybeschichten beschichtet werden. Die Dicke des Überzugsfilms davon fällt geeigneterweise in einen Bereich von gewöhnlich 5 bis 35 $\mu$m, insbesondere 10 bis 25 $\mu$m, als gehärteter Überzugsfilm. Der Überzugsfilm kann dadurch gehärtet werden, dass er etwa 10 bis etwa 40 Minuten lang auf etwa 100 bis etwa 180°C erhitzt wird.

In dem aus der erfindungsgemäßen Metallpigmente enthaltenden Beschichtungszusammensetzung gebildeten Überzugsfilm sind die Metallpigmente des Metallpigments gleichförmig auf der beschichteten Oberfläche und parallel zu der beschichteten Oberfläche ausgerichtet und der erhaltene Überzugsfilm hat ausgezeichnete Flip-Flop-Eigenschaften im Vergleich zu einem herkömmlichen metallischen Überzugsfilm. Dazu kommt noch, dass der ausgeprägte Effekt erhalten wird, dass diese metallischen Pigmente gleichförmig dispergiert sind und dass eine metallische Mamorierung kaum beobachtet wird.

Eine klare Beschichtungszusammensetzung kann auf den Überzugsfilm aus der erfindungsgemäßen Beschichtungszusammensetzung nach dessen Härtung oder ohne dessen Härtung, d.h. auf eine beschichtete Seite davon, durch ein "2-mal-Aufschichten-1-mal-Härten" (2C1B)-Verfahren oder ein "2-mal-Aufschichten-2-mal-Härten" (2C2B)-Verfahren beschichtet werden.

Weiterhin eignen sich die erfindungsgemäße Beschichtungsmaterialien auch für die Verwendung in einem 2-fach Auftrag (Nass-in Nass Lackierung) auf den nach kurzer Vortrocknung ein Klarlack aufgetragen wird, der Zusammen mit den zuerst lackierten Schichten eingebrannt wird (3C1 B).

Die klare Beschichtungszusammensetzung kann dadurch aufgeschichtet werden, dass zuerst die erfindungsgemäße Beschichtungszusammensetzung auf den zu beschichtenden Gegenstand in der oben beschriebenen Art und Weise aufgeschichtet wird und dass man die klare Beschichtungszusammensetzung mit einem auf etwa 30 bis etwa 80 Massen-% kontrollierten Feststoffgehalt in der Beschichtungszusammensetzung auf eine beschichtete Oberfläche davon durch ein elektrostatisches Beschichten, ein Luftsprühbeschichten und ein luftloses Sprühbeschichten nach dem Härten eines Überzugsfilms davon durch Erhitzen oder im nicht-gehärteten Zustand aufgeschichtet wird. Die Filmdicke der klaren Beschichtungszusammensetzung fällt geeigneterweise in einen Bereich von gewöhnlich 5 bis 100 $\mu$m, insbesondere 20 bis 80 $\mu$m, bezogen auf den gehärteten Überzugsfilm. Der Überzugsfilm kann dadurch gehärtet werden, dass er etwa 10 bis etwa 40 Minuten lang auf etwa 100 bis etwa 180°C erhizt wird.

Im Folgenden wird die Erfindung an Hand von Ausführungsbeispielen näher erläutert.

Beispiele

Die im Folgenden genannten "Teile" einer Zusammensetzung sind als "Massenanteile" zu verstehen.

I. Wässriger Metallic-Basislack

Ia. Herstellung der Lacke

Beispiel 1 (nicht erfindungsgemäß)

17,5 Teile einer wässrigen Bindemitteldispersion nach DE19948004 A1, Seite 20, Zielen 9 bis 21 werden unter starkem Rühren mit 27 Teilen einer 3 %igen wässrigen Dispersion von Laponite® RD vermischt. Unter Rühren werden 4,5 Teile eines acrylatmodifizierten Polyurethanharzes nach DE4437535 A1, Seite 7, Zelle 55 bis Seite 8, Zelle 23, 1,8 Teile einer Lösung aus 50 Teilen Surfinol® 104 (Air Products) und 50 Teilen Butylglykol sowie 4,5 Teile des Melaminharzes Luwipal® 052 (BASF) (BASF), 2 Teilen Butylglykol und 4 Teile des in DE4009858 A1, Spalte 16, Zellen 37-59 beschriebenen Polyesters zugegeben.

Anschließend wird eine glatt gerührte Mischung von 5,4 g des Aluminiumpigmentes Stapa® Hydrolux 2192 (Eckart) in 8 Teilen Butylglykol zugegeben. Der pH wird mit einer Dimethylethanolamin (10%lg in Wasser)auf 8,0 und die Viekosität mit Wasser auf 70 mPas bei 1000 s$^{-1}$ und 23 °C eingestellt (Rheolab MC1 der Fa. Physica, Messsystem Z2).

Beispiel 2 (nicht erfindungsgemäß)

Zu 17,5 Teilen einer wässrigen Bindemitteldispersion, beschrieben in DE19948004 A1, Seite 20, Zeilen 9 bis 21 werden unter Rühren 4,5 Teile eines acrylatmodifizierten Polyurethanharzes (DE4437535 A1, Seite 7, Zeile 55 bis Seite 8, Zelle 23), 1,8 Teile einer Lösung aus 50 Teilen Surfinol® 104 (Air Products) und 50 Teilen Butylglykol sowie 4,5 Telle des Melaminatzes Luwipal® 052 (BASF), 2 Teile Butylglykol, 4 Teile des in DE 4009858 A1, Spalte 18, Zeilen 37-59 beschriebenen Polyesters und 30 Teile einer 20 %igen wässrigen Vormischung des Polyamid-Verdickers Disparion® AQ 630 in Wasser zugegeben.
Anschließend wird eine glatt gerührte Mischung von 5,4 g des Aluminiumpigmentes Stapa® Hydrolux 2192 (Eckart) in 8 Teilen Butylglykol zugegeben. Der pH wird mit einer Dimethylethanolamin (10%ig In Wasser) auf 8,0 und die Viskosität mit Wasser auf 70 mPas bei 1000 s⁻¹ und 23 °C eingestellt (Rheolab MC1 der Fa. Physka, Messsystem Z2).

Beispiel 3 (erfindungsgemäßes Beispiel)

Zu 17,5 Teilen einer wässrigen Bindemitteldispersion, beschrieben in DE19948004 A1, Seite 20, Zellen 9 bis 21 werden unter Rühren 4,5 Teile eines acrylatmodifizierten Polyurethanharzes (DE4437535 A1, Seite 7, Zeile 55 bis Seite 8, Zeile 23),1,8 Teile einer Lösung aus 50 Teilen Surfinol® 104 (Air Products) und 50 Teilen Butylglykol, sowie 4,5 Teile des Melaminharzes Luwlpal® 052 (BASF), 2 Teile Butylglykol, 4 Teilen des in DE 4009858 A1, Spalte 16, Zellen 37-69 beschriebenen Polyesters und 30 Teile einer 20 %igen wässrigen Vormischung des Polyamid-Verdickers Disparton® AQ 630 In Wasser und eine Mischung aus 0.75 Teilen des Acrylatverdickers Viscalex® HV30 und 0,75 Teilen Wasser zugegeben. Anschließend wird eine glatt gerührte Mischung von 5,4 g des Aluminiumpigmentes Stapa® Hydrolux 2192 (Eckart) in 8 Teilen Butylglykol zugeben. Der pH wird mit einer Dimethylethanolamin (10%ig in Wasser) auf 8,0 und die Viskosität mit Wasser auf 70 mPas bei 1000 s⁻¹ und 23 °C eingestellt (Rheolab MC1 der Fa. Physica, Messaystem Z2).

Beispiel 4 (nicht erfindungsgemäß)

17,5 Teile einer wässrigen Bindemitteldispersion, beschrieben in DE19948004 A1, Seite 20, Zellen 9 bis 21, werden mit 6 Teilen einer 3 %igen wässrigen Dispersion von Laponite® RD vermischt. Unter Rühren werden 4.5 Teile eines acrylatmodifizierten Polyurethanharzes nach DE4437535 A1, Seite 7. Zeile 55 bis Seite 8, Zeile 23, 1,8 Teile einer Lösung aus 60 Teilen Surfinol® 104 (Air Products) und 50 Teilen Butylglykol, sowie 4,5 Teile des Melaminharzes Luwipal® 052 (BASF), 2 Teile Butylglykol, 4 Teilen des In DE 4009868 A1, Spalte 16, Zeilen 37-59 beschriebenen Polyesters und eine Mischung aus 0,75 Teilen des Acrylatverdickers Viscalex® HV30 und 0,75 Teilen Wasser zugegeben.
Anschließend wird eine glatt gerührte Mischung von 5,4 g des Aluminiumpigmentes Stapa® Hydrolux 2192 (Eckart) in 8 Teilen Butylglykol zugegeben. Der pH wird mit einer Dimethylethanolamin (10%Ig In Wasser) auf 8,0 und die Viskosität mit Wasser auf 70 mPas bei 1000 s⁻¹ und 23 °C eingesteilt (Rheolab MC1 der Fa. Physica, Messsystem Z2).

Beispiel 5 (nicht erfindungsgemäß)

17.5 Teile einer wässrigen Bindemitteldispersion, beschrieben in DE19948004 A1, Seite 20, Zellen 9 bis 21, werden mit 6 Teilen einer 3 %igen wässrigen Dispersion von Laponite® RD vermischt. Unter Rühren werden 4,5 Teile eines acrylatmodifizierten Polyurethanharzes nach DE4437535 A1, Seite 7, Zeile 55 bis Seite 8, Zelle 23, 1,8 Teile einer Lösung aus 80 Teilen Surfinol® 104 (Air Products) und 50 Teilen Butylglykol ,sowie 4,5 Teile des Melaminharzes Luwipal® 052 (BASF), 2 Teile Butylglykol, 4 Teile des in DE 4009858 A1, Spalte 18 Zeilen 37-59 beschriebenen Polyesters und 15 Teile einer 20 %igen wässrigen Vermischung des Polyamid-Verdickers Diaparton® AQ 630 in Wasser, sowie eine Mischung aus 0,75 Telien des Acrylatverdickers Viscalex® HV30 und 0,75 Teilen Wasser zugegeben.
Anschließend wird eine glatt gerührte Mischung von 5.4 g des Aluminiumpigmentes Stapa® Hydrolux 2192 (Eckart) In 8 Teilen Butylglykol zugegeben. Der pH wird mit einer Dimethylethanolamin (10%ig In Wasser) auf 8.0 und die Viskosität mit Wasser auf 70 mPas bei 1000 s⁻¹ und 23 °C eingestellt (Rheolab MC1 der Fa. Physica, Messsystem 22).

Beispiel 6 (nicht erfindungsgemäß)

17,5 Teile einer wässrigen Bindemitteldispersion, beschrieben in DE19948004 A1, Seite 20, Zeilen 9 bis 21, werden mit 6 Teilen einer 3 %igen wässrigen Dispersion von Laponite® RD vermischt Unter Rühren werden 4,5 Teile eines acrylatmodifizierten Polyurethanharzes nach DE4437635 A1, Seite 7, Zeile 55 bis Seite 8, Zeile 23, 1,8 Teile einer Lösung aus 60 % Teilen Surfinol® 104 (Air Products) und 50 Teilen Butylglykol, sowie 4,6 Teile des Melaminharzes Luwipal® 052 (BASF). 2 Teile Butylglykol, 4 Teile des in DE 4009858 A1, Spalte 16 Zeilen 37-59 beschriebenen Polyesters und 30 Teile einer 20 %igen wässrigen Vormischung des Polyamid-Verdickers Disparion® AQ 630 in Wasser zugegeben.

Anschließend wird eine glatt gerührte Mischung von 5,4 g des Aluminiumpigmentes Stapa® Hydrolux 2192 (Eckart) in 8 Teilen Butylglykol zugegeben. Der pH wird mit einer Dimethylethanolamin (10%ig in Wasser) auf 8,0 und die Viskosität mit Wasser auf 70 mPas bei 1000 s$^{-1}$ und 23 °C eingestellt (Rheolab MC1 der Fa. Physica, Messsystem Z2).

Beispiel 7 (nicht erfindungsgemäß)

Die Herstellung wird analog zu Beispiel 6 durchgeführt mit der Änderung, dass 15 statt 6 Teile Laponite®-Dispersion und 15 statt 30 Teile Disparion®Vormischung eingesetzt werden.

Beispiel 8 (nicht erfindungsgemäß)

Die Herstellung wird analog zu Beispiel 6 durchgeführt mit der Änderung, dass 27 statt 6 Teile Laponite®-Dispersion und 5 statt 30 Teile Disparion®-Vormischung eingesetzt werden.

**Ib. Prüfung der Lacke**

Der erhaltene Wasserbasislack wird auf einer Metalltafel 30 cm x 60 cm, die mit einem handelsüblichen Wasserfüller (z.B. SecuBloc, BASF Coatings AG) in einer Schichtstärke von 12 μ lackiert, anschließend wird 5 min bei Raumtemperatur und 10 min bei 80 °C vorgetrocknet. Das vorgatrocknete Blech wird anschließend mit einem handelsüblichen Klariack (z. B. Evergloss, BASF AG) beschichtet und 30 min bei 140 °C eingebrannt.

Bestimmung der Helligkeit

Die Beurteilung des Farbtons erfolgt durch farbmetrische Messung. Die Helligkeit wurde im 15'-Meßwinkel beurteilt (Farbmetrikmessung mit X-Rite MA 68 II der Fa. X-Rite).

Bestimmung des Flop-Index

Der Flop-Index errechnet sich aus den farbmetrisch für die unterschiedlichen Messwinkel bestimmten Helligkeitswerten nach der Formel

$$\text{Flop Index} = 2,69(L^*_{15} - L^*_{110})^{1,11}/(L^*_{45})^{0,86},$$

wobei L für den im jeweiligen Messwinkel (15°, 45° und 110°) gemessenen Helligkeltswert steht.

Bestimmung der Nadelstiche

Zur Prüfung der Nadelstichresistenz wird der Basislack auf einem Blech (30 cm x 60 cm) in einem Kellauftrag In einer Schichtdicke von 10-30 μm lackiert, anschließend wird 5 min bei Raumtemperatur und 10 min bei 80 °C vorgetrocknet. Das vorgetrocknete Blech wird anschließend mit einem handelsüblichen Klarlack (Evergloss, BASF AG) In einer Schichtdicke von 30-35μ beschichtet und 30 min bei 140 °C eingebrannt. Die Anzahl der Nadelstiche wird visuell bestimmt.

Bestimmung der Sedimentationsstabilität

Der erhaltene Lack wird in einem Glasgefäß (Durchmesser 6 cm, Füllhöhe 10 cm) 10 Tage bei 40 °C gelagert. Anschließend wird die Höhe des Überstands über Sediment ermittelt.

Ergebnisse

| Beispiel | | 1 | 2 | 3* | 4 | 5 | 6 | 7 | 8 |
|---|---|---|---|---|---|---|---|---|---|
| Teile Rheologie-hilfsmittel | Laponite® RD (3%ige Vormischg.) | 27,0 | | | 6,0 | 6,0 | 6.0 | 15,0 | 27,0 |
| | Viscalex® HV30 | | | 0,76 | 0,75 | 0,75 | | | |
| | Disparion® AQ 630 (20%ige Vormischg.) | | 30,0 | 30,0 | | 15,0 | 30,0 | 15,0 | 5,0 |
| Prüfung | Helligkeit | 138 | 129 | 134 | 123 | 134 | 133 | 131 | 138 |
| | Flop Index | 17 | 15 | 17 | 13 | 16 | 16 | 18 | 17 |
| | Anzahl Nadelstiche | 12 | 0 | 0 | 0 | 0 | 0 | 15 | 14 |
| | Sedimentation in cm | 0 | 4.5 | 0 | 0 | 0 | 6 | 0 | 0 |
| *erfindungsgemäßer Wasserbasislack | | | | | | | | | |

Die Kombination von Polyamidverdickem mit Acrylatverdickem (Beispiel 3) oder die Kombination von Polyamid-, Poly(meth)acrylatverdicker und Schichtsilikat (Beispiel 5) zeigen ein gutes Eigenschaftsprofil bezüglich des Metalleffektes (dargestellt durch Helligkeit und Flop Index), der Resistenz gegen Nadelstiche und der Resistenz gegen Sedimentation.

Wässrige Metallic-Basislacke mit Schichtsillkat und Polyamid als Rheologiehilfsmittel ohne Poly(meth)acrylsäuren weisen hingegen eine erhöhte Sedimentation (Beispiel 6) bzw. eine hohe Anzahl an Nadelstichen (Beispiele 7 und 8) auf.

## II. Wässriger Uni-Wasserbasislack

### IIa. Herstellung der Lacke

Beispiel 9: Herstellung einer Pigmentpaste

39 Teile eines gemäß Beispiel 1 der DE-A 4010176 hergestellten Anreibebindemittels werden unter starkem Rühren mit 6 Teilen eines handelsüblichen Dispergleradditives, 25 Teilen Wasser und 30 Teilen ingazin® Rot A2BN (Fa. Ciba) vermischt, 30 min dissolvert und anschließend 40 min auf einer Perimühle bei max. 50 °C vermahlen.

Beispiel 10 (nicht erfindungsgemäß)

Zu 15 Teilen einer 3 %lgen Dispersion von Laponite RD in Wasser werden unter Rühren 1,7 Teile eines acrylatmodufizierten Polyurethanharzes nach DE4437535 A1, Seite 7, Zeile 55 bis Seite 8, Zeile 23, anachliessend 1,5 Teile einer Lösung aus 50Teilen Surfinol® 104 (Air Products) und 50 Teilen Butylglykol, sowie 29 Teile des In EP0228003 B2, Seite 8, Zeile 6-18 beschriebenen Polyurethanharzes zugegeben. Anschließend werden 5,5 Teile eines handelsüblichen Melaminharzes (Luwipal® 052, BASF), 4,5 Teile des in DE 4008858 A1, Spalte 16, Zellen 37-59 beschriebenen Polyesters, 8 Teile Butylglykol und 1,5 Teile einer 10 %igen Lösung von Dimethylethanolamin in Wasser unter Rühren zugegeben. Danach werden 18 Teile einer Pigmentpaste nach Beispiel 9 sowie 2,5 Teile 2-Ethylhexanol zugegeben. Mit Wasser wird auf eine Viskosität von 90 mPas bei 1000 s$^{-1}$ eingestellt (Rheolab MC1 der Fa. Physica, Messsystem Z2).

Beispiel 11 (nicht erfindungsgemäß)

Zu 26 Teilen des in EP0228003 B2, Seite 3, Zelle 6 18 beschrieben Polyurethanharzes werden unter Rühren 1,7 Teile eines acrylatmodifizierten Polyurethanharzes nach DE4437535 A1, Seite 7, Zeile 55 bis Seite 8, Zeile 23, 1,5 Teile einer Lösung aus 50 Teilen Surfinol® 104 (Air Products) und 50 Teilen Butylglykol zugegeben. Anschließend werden 5,5 Teil eines handelsüblichen Melaminharzes (Luwipal® 052, BASF), 4,5 Teile des in DE4009858 A1, Spalte 16, Zeilen 37-59 beschriebenen Polyesters, 8 Teile Butylglykol und 1,5 Teile einer 10 %igen Lösung von Dimethylethanolamin in Wasser unter Rühren zugegeben. Danach werden 18 Teile einer Pigmentpaste nach Beispiel 9 sowie 2,5 Teile 2-Ethylhexanol zugegeben. Unter Rühren gibt man dann 20 Teile einer 20 %igen Dispersion von Disparlon® AQ630 in Wasser hinzu und stellt mit Wasser auf eine Viskosität von 90 mPas bei 1000 s$^{-1}$ ein (Rheolab MC1 der Fa. Physica, Messsystem Z2).

Beispiel 12 (erfindungsgemäßer Basislack)

Zu 6 Teilen einer 3 % Dispersion von Laponite® RD in Wasser werden unter Rühren 1,7 Teile eines acrylatmodifizierten Polyurethanharzes nach DE4437535 A1, Seite 7, Zeile 55 bis Seite 8, Zeile 23, 1,5 Teile einer Lösung aus 50 Teilen Surfinol® 104 (Air Products) und 50 Teilen Butylglykol und 29 Teile des in EP0228003 B2, Seite 8, Zeile 6-18 beschriebenen Polyurethanharzes zugegeben. Anschließend werden 5,5 Teile eines handelsüblichen Melaminharzes (Luwipal® 052, BASF), 4,5 Teile des in DE 4009858 A1, Spalte 16, Zeilen 37-59 beschriebenen Polyesters, 8 Teile Butylglykol und 1,5 Teile einer 10 %igen Lösung von Dimethylethanolamin in Wasser unter Rühren zugegeben. Danach werden 18 Teile einer Pigmentpaste nach Beispiel 9 sowie 2,5 Teile 2-Ethylhexanol zugegeben. Unter Rühren gibt man dann 20 Teile einer 20 %igen Dispersion von Disparlon® AQ630 in Wasser hinzu sowie eine Mischung aus 0,5 Teilen des Acrylatverdickers Viscalex® HV30 und 0,5 Teilen Wasser und stellt mit Wasser auf eine Viskosität von 90 mPas bei 1000 s$^{-1}$ ein (Rheolab MC1 der Fa. Physica, Messsystem Z2).

Beispiel 13 (erfindungsgemäßer Basislack)

Zu 29 Teilen des in EP0228003 B2, Seite 8, Zeile 6-18 beschriebenen Polyurethanharzes werden unter Rühren 1,7 Teile eines acrylatmodifizierten Polyurethanharzes nach DE 4437535 A1, Seite 7, Zeile 55 bis Seite 8, Zeile 23, 1,5 Teil Lösung aus 50 Teilen Surfinol® 104 (Air Products) und 50 Teilen Butylglykol zugegeben. Anschließend werden 5,5 Teile eines handelsüblichen Melaminharzes (Luwipal® 052 (BASF)), 4,5 Teile des in DE 4009858 A1, Spalte 16 Zeilen 37-59 beschriebenen Polyesters, 8 Teile Butylglykol und 1,5 Teile einer 10 %igen Lösung von Dimethylethanolamin in Wasser unter Rühren zugegeben. Danach werden 18 Teile einer Pigmentpaste nach Beispiel 9 sowie 2,5 Teile 2-Ethylhexanol zugegeben. Unter Rühren gibt man dann 20 Teile einer 20 %igen Dispersion von Disparlon® AQ630 in Wasser sowie eine Mischung aus 0,5 Teilen des Acrylatverdickers Viscalex® HV30 und 0,5 Teilen Wasser hinzu und stellt mit Wasser auf eine Viskosität von 90 mPas bei 1000 s$^{-1}$ ein (Rheolab MC1 der Fa. Physica, Messsystem Z2).

**IIb. Prüfung der Lacke**

Bestimmung der Nadelstiche

Zur Prüfung der Nadelstichresistenz wird der Basislack auf einem Blech (30 cm x 60 cm) in einer Schichtdicke von 10-35 μm lackiert, anschließend wird 5 min bei Raumtemperatur und 10 min bei 80 °C vorgetrocknet. Das vorgetrocknete Blech wird anschließend mit einem handelsüblichen Klarlack (Evergloss, BASF AG) in einer Schichtdicke von 30-35 μm beschichtet und 30 min bei 140 °C eingebrannt. Die Anzahl der Nadelstiche wird visuell bestimmt.

Bewertung der Läufer

Zur Prüfung der Läuferresistenz wird der Basislack auf einem Blech (30 cm x 60 cm), in das der Länge nach eine Reihe Löcher gestanzt wurde, in einer Schichtdicke von 10-35 μm lackiert, anschließend wird 5 min bei Raumtemperatur und 10 min bei 80 °C in vertikaler Position vorgetrocknet. Das vorgetrocknete Blech wird anschließend 30 min bei 140 °C eingebrannt. Die Schichtdicke, bei der sich an den Löchern Läufer bilden, wird visuell bestimmt

Ergebnisse

| | Beispiel | 10 | 11 | 12* | 13* |
|---|---|---|---|---|---|
| Anteile Rheologiehilfsmittel | Laponite® RD (3% ige Vormischg.) | 15 | | 6 | |
| | Viscalex® HV30 | | | 0,5 | 0,5 |
| | Disparlon® AQ 630 (20%ige Vormischg.) | | 20 | 20 | 20 |

(fortgesetzt)

| Beispiel | | 10 | 11 | 12* | 13* |
|---|---|---|---|---|---|
| Prüfung | Anzahl Nadelstiche | 120 | 0 | 0 | 0 |
| | Läufergrenze in μm | 20 | 28 | >35 | >35 |
| *erfindungsgemäß | | | | | |

Es zeigt sich, dass die erfindungsgemäßen Beispiele 12 und 13 ein Optimum bezüglich Resistenz gegen Nadelstiche und Läuferbildung zeigen.

**Patentansprüche**

1. Beschichtungszusammensetzung auf Wasserbasis, umfassend mindestens eine Harzzusammensetzung für eine Beschichtungszusammensetzung auf Wasserbasis und als Rheologiehilfsmittel mindestens ein Polyamid und mindestens ein Acrylatverdicker auf Poly(meth)acrylsäure-Basis, **dadurch gekennzeichnet, dass** das Massenverhältnis Polyamid:Acrylatverdicker bei 10:1 bis 3:1 liegt.

2. Beschichtungszusammensetzung nach Anspruch 1, **dadurch gekennzeichnet, dass** sie mindestens ein farb- und/oder effektgebendes Pigment enthält.

3. Beschichtungszusammensetzung nach Anspruch 2, **dadurch gekennzeichnet, dass** das farb- und/oder effektgebende Pigment aus der Gruppe bestehend aus organischen und anorganischen, farbgebenden, füllenden, rheologiesteuernden, optisch effektgebenden, elektrisch leitfähigen, magnetisch abschirmenden und fluoreszierenden Pigmenten, Metallpigmenten, organischen und anorganischen, transparenten oder deckenden Füllstoffen und Nanopartikeln ausgewählt ist.

4. Beschichtungszusammensetzung nach einem der Ansprüche 1 bis 3, **dadurch gekennzeichnet, dass** es sich um einen Uni-Basislack oder einen Uni-Decklack handelt.

5. Beschichtungszusammensetzung nach Anspruch 2, **dadurch gekennzeichnet, dass** das farb- und/oder effektgebende Pigment ein Metallpulver ist.

6. Beschichtungszusammensetzung nach Anspruch 5, **dadurch gekennzeichnet, dass** das Metallpigment ausgewählt ist aus der Gruppe bestehend aus Aluminium, Bismuthoxychlorid, Glimmer, titanoxid-beschichtetem Glimmer, eisenoxid-beschichtetem Glimmer, glimmerhaltigem Eisenoxid, titanoxid-beschichteter Kieselsäure, titanoxid-beschichtetem Aluminium, eisenoxid-beschichteter Kieselsäure und eisenoxid-beschichtetem Aluminium.

7. Beschichtungszusammensetzung nach einem der Ansprüche 1 bis 6, **dadurch gekennzeichnet, dass** sie 0,5 bis 15 Massen-%, bezogen auf den Gesamtbindemittelfestkörper, Rheologiehilfsmittel enthält.

8. Beschichtungszusammensetzung nach einem der Ansprüche 1 bis 7, **dadurch gekennzeichnet, dass** das Massenverhältnis Polyamid: Acrylatverdicker bei 7:1 bis 3:1 liegt.

9. Beschichtungszusammensetzung nach einem der Ansprüche 1 bis 8, **dadurch gekennzeichnet, dass** sie mindestens ein weiteres Rheologiehilfsmittel enthält.

10. Beschichtungszusammensetzung nach Anspruch 9, **dadurch gekennzeichnet, dass** das weitere Rheologiehilfsmittel ausgewählt ist aus der Gruppe bestehend aus assoziativen Verdickungsmitteln auf Polyurethan-Basis, Carboxymethylcelluloseacetobutyrat-Verdicker, Metallsilikat und Kieselsäure.

11. Beschichtungszusammensetzung nach Anspruch 9 oder 10, **dadurch gekennzeichnet, dass** das Massenverhältnis Polyamid:Acrylatverdicker:weiterem Verdicker bei 12:1:1 bis 1:0,5:1, bevorzugt 7:1:1 bis 3:0,5:1 liegt.

12. Beschichtungszusammensetzung nach einem der Ansprüche 1 bis 11, **dadurch gekennzeichnet, dass** die Harzzusammensetzung ein Bindemittel, das in Wasser gelöst oder dispergiert werden kann, und ein Vernetzungsmittel umfasst.

**13.** Verfahren zur Herstellung einer Beschichtungszusammensetzung nach einem der Ansprüche 1 bis 12, **dadurch gekennzeichnet, dass** die einzelnen Komponenten in einem wässrigen Medium gemischt und dispergiert werden.

**14.** Verwendung der Beschichtungszusammensetzung nach einem der Ansprüche 1 bis 13 als Lackierung auf zu beschichtende Gegenstände wie aus Metall oder Kunststoff hergestellte Karosserien und deren Teile von Automobilen wie Personenkraftwagen, Lastwagen, Motorrädern und Autobussen, und aus Metall oder Kunststoff hergestellte Teile von elektrischen Haushaltsprodukten.

**15.** Verwendung der Beschichtungszusammensetzung nach einem der Ansprüche 1 bis 13 als Lackierung für Automobilkarosserien und deren Teile.

**Claims**

**1.** Water-based coating composition comprising at least one resin composition for a water-based coating composition and as rheological assistants at least one polyamide and at least one acrylate thickener based on poly(meth)acrylic acid, **characterized in that** the mass ratio of polyamide to acrylate thickener is 10:1 to 3:1.

**2.** Coating composition according to Claim 1, **characterized in that** it comprises at least one colour and/or effect pigment.

**3.** Coating composition according to Claim 2, **characterized in that** the colour and/or effect pigment is selected from the group consisting of organic and inorganic, colouring, extending, rheology-controlling, optical-effect-imparting, electrically conductive, magnetically shielding, and fluorescent pigments, metallic pigments, organic and inorganic, transparent or hiding fillers, and nanoparticles.

**4.** Coating composition according to any one of Claims 1 to 3, **characterized in that** it is a solid-colour basecoat material or a solid-colour topcoat material.

**5.** Coating composition according to Claim 2, **characterized in that** the colour and/or effect pigment is a metal powder.

**6.** Coating composition according to Claim 5, **characterized in that** the metallic pigment is selected from the group consisting of aluminium, bismuth oxychloride, mica, titanium oxide-coated mica, iron oxide-coated mica, micaceous iron oxide, titanium oxide-coated silica, titanium oxide-coated aluminium, iron oxide-coated silica, and iron oxide-coated aluminium.

**7.** Coating composition according to any one of Claims 1 to 6, **characterized in that** it contains 0.5 to 15% by mass of rheological assistants, based on the total binder solids.

**8.** Coating composition according to any one of Claims 1 to 7, **characterized in that** the mass ratio of polyamide to acrylate thickener is 7:1 to 3:1.

**9.** Coating composition according to any one of Claims 1 to 8, **characterized in that** it comprises at least one further rheological assistant.

**10.** Coating composition according to Claim 9, **characterized in that** the further rheological assistant is selected from the group consisting of polyurethane-based associative thickeners, carboxymethylcellulose acetobutyrate thickeners, metal silicate, and silica.

**11.** Coating composition according to Claim 9 or 10, **characterized in that** the mass ratio of polyamide to acrylate thickener to further thickener is 12:1:1 to 1:0.5:1, preferably 7:1:1 to 3:0.5:1.

**12.** Coating composition according to any one of Claims 1 to 11, **characterized in that** the resin composition comprises a binder, which may be in dispersion or solution in water, and a crosslinking agent.

**13.** Process for preparing a coating composition according to any one of Claims 1 to 12, **characterized in that** the individual components are mixed and dispersed in an aqueous medium.

14. Use of the coating composition according to any one of Claims 1 to 13 as a paint system on articles to be coated such as metal or plastics bodies and parts thereof for automobiles such as passenger cars, trucks, motorbikes, and buses, and metal or plastics parts of household electrical products.

15. Use of the coating composition according to any one of Claims 1 to 13 as a paint system for automobile bodies and parts thereof.

**Revendications**

1. Composition de revêtement à base aqueuse, comprenant au moins une composition de résine pour une composition de revêtement base aqueuse et, en tant qu'adjuvant de rhéologie, au moins un polyamide et au moins un épaississant acrylate à base de poly[acide (méth)acrylique], **caractérisé en ce que** le rapport massique polyamide:épaississant acrylate vaut de 10:1 à 3:1.

2. Composition de revêtement selon la revendication 1, **caractérisée en ce qu'**elle contient au moins un pigment colorant et/ou à effet.

3. Composition de revêtement selon la revendication 2, **caractérisée en ce que** le pigment colorant et/ou à effet est choisi dans le groupe constitué par des pigments organiques et inorganiques, colorants, de garnissage, régulateurs de rhéologie, à effet optique, conducteurs de l'électricité, antimagnétiques et fluorescents, des pigments métalliques, des charges organiques et inorganiques, transparentes ou couvrantes, et des nanoparticules.

4. Composition de revêtement selon l'une quelconque des revendications 1 à 3, **caractérisée en ce qu'**il s'agit d'une peinture de fond universelle ou d'une peinture de finition universelle.

5. Composition de revêtement selon la revendication 2, **caractérisée en ce que** le pigment colorant et/ou à effet est une poudre métallique.

6. Composition de revêtement selon la revendication 5, **caractérisée en ce que** le pigment métallique est choisi dans le groupe constitué par l'aluminium, l'oxychlorure de bismuth, le mica, le mica enrobé d'oxyde de titane, le mica enrobé d'oxyde de fer, l'oxyde de fer contenant du mica, l'acide silicique enrobé d'oxyde de titane, l'aluminium enrobé d'oxyde de titane, l'acide silicique enrobé d'oxyde de fer et l'aluminium enrobé d'oxyde de fer.

7. Composition de revêtement selon l'une quelconque des revendications 1 à 6, **caractérisée en ce qu'**elle contient de 0,5 à 15 % en masse, par rapport à l'ensemble des solides de liant, d'adjuvant de rhéologie.

8. Composition de revêtement selon l'une quelconque des revendications 1 à 7, **caractérisée en ce que** le rapport massique polyamide:épaississant acrylate vaut de 7:1 à 3:1.

9. Composition de revêtement selon l'une quelconque des revendications 1 à 8, **caractérisée en ce qu'**elle contient au moins un autre adjuvant de rhéologie.

10. Composition de revêtement selon la revendication 9, **caractérisée en ce que** l'autre adjuvant de rhéologie est choisi dans le groupe constitué par des épaississants associatifs à base de polyuréthane, des épaississants carboxyméthylcellulose-acétobutyrate, un silicate métallique et l'acide silicique.

11. Composition de revêtement selon la revendication 9 ou 10, **caractérisée en ce que** le rapport massique polyamide: épaississant acrylate:autre épaississant vaut de 12:1:1 à 1:0,5:1, de préférence de 7:1:1 à 3:0,5:1.

12. Composition de revêtement selon l'une quelconque des revendications 1 à 11, **caractérisée en ce que** la composition de résine comprend un liant, qui peut être dissous ou dispersé dans l'eau, et un agent de réticulation.

13. Procédé pour la préparation d'une composition de revêtement selon l'une quelconque des revendications 1 à 12, **caractérisé en ce qu'**on mélange et disperse les composants individuels dans un milieu aqueux.

**14.** Utilisation de la composition de revêtement selon l'une quelconque des revendications 1 à 13, en tant que revêtement de peinture sur des subjectiles à revêtir tels que des carrosseries et leurs pièces, fabriquées en métal ou en matière plastique, d'automobiles telles des voitures de touriste, camions, motocyclettes et autobus, et de pièces fabriquées en métal ou en matière plastique de produits électroménagers.

**15.** Utilisation de la composition de revêtement selon l'une quelconque des revendications 1 à 13, en tant que revêtement de peinture pour des carrosseries d'automobiles et leurs pièces.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4028386 A1
- US 20040039097 A1
- EP 1153989 A1
- DE 19946574 A1
- EP 0158099 A2
- DE 19948004 A1
- DE 03545618 A1
- DE 4437535 A1
- EP 0596460 A1
- DE 4009858 A1
- DE 4009868 A1
- DE 4437635 A1
- DE 4010176 A
- EP 0228003 B2
- DE 4008858 A1

**In der Beschreibung aufgeführte Nicht-Patentliteratur**

- Römpp Lexikon, Lacke und Druckfarben. Georg Thieme Verlag, 1998